# DEMANDE DE BREVET EUROPEEN

(11) **EP 1 101 966 A2**
(43) Date de publication de la demande: **23.05.2001**
(21) Numéro de dépôt: 00403208.2
(22) Date de dépôt: 17.11.2000
(51) Int. Cl.: F16D 23/06

(54) **Dispositif de synchronisation d'un pignon fou**

(30) Priorité: 22.11.1999 FR 9914650
(71) Demandeur: Renault, 92100 Boulogne Billancourt (FR)
(72) Inventeur: Jacquart, Eric, 92000 Nanterre (FR)

(57) **Abrégé**

L'invention concerne un dispositif (10) de synchronisation d'un pignon fou (12) sur un arbre (14), comportant un moyeu (16) fixe recevant en coulissement axial et entraînant en rotation un baladeur (20) susceptible d'être craboté sur au moins un pignon fou (12), comportant un anneau (22) de synchronisation interposé axialement entre le moyeu (16) et le pignon fou (12), et du type dans lequel le baladeur (20) comporte un jeu de dentures (28) dont une première partie (36) coopère avec des dentures (30) du moyeu (16) pour assurer son entraînement en rotation et son guidage axial et dont une deuxième partie (38) coopère avec un jeu complémentaire de dentures (34) du pignon fou (12) pour assurer le crabotage et le maintien en position crabotée du baladeur (20) sur celui-ci, caractérisé en ce que la deuxième (38) partie (38) du jeu de dentures (28) du baladeur (20) est décalée radialement par rapport à la première partie (36) du jeu de dentures (28) et aux dentures (30) associées du moyeu (16).

## Description

L'invention concerne un dispositif pour la synchronisation en rotation d'un pignon fou.

L'invention concerne plus particulièrement un dispositif de synchronisation d'un pignon fou sur un arbre, comportant un moyeu fixe recevant en coulissement axial et entraînant en rotation un baladeur susceptible d'être craboté sur au moins un pignon fou, comportant un anneau de synchronisation interposé axialement entre le moyeu et le pignon fou, et du type dans lequel le baladeur comporte un jeu de dentures dont une première partie coopère avec des dentures complémentaires du moyeu pour assurer son entraînement en rotation et son guidage axial et dont une deuxième partie coopère avec un jeu complémentaire de dentures du pignon fou pour assurer le crabotage et le maintien en position crabotée du baladeur sur celui-ci.

On connaît de nombreux exemples de dispositifs pour la synchronisation en rotation d'un pignon fou de ce type.

Dans ceux-ci, le baladeur est guidé par l'intermédiaire d'un jeu de dentures intérieures droites, c'est à dire des dentures dont la ligne moyenne s'étend axialement suivant la direction de l'axe du baladeur, sur des dentures extérieures du moyeu.

Il s'agit pour la plupart de dispositifs pour lesquels la première partie, de premier profil déterminé, et la deuxième partie, de deuxième profil déterminé, du jeu de dentures du baladeur sont alignées axialement et sont de même "hauteur", c'est à dire qu'elles s'étendent à partir d'une génératrice du baladeur suivant des distances radiales égales.

Le premier profil de la première partie du jeu de dentures intérieures du baladeur est agencé dans une partie axialement intermédiaire du baladeur et comporte des dentures droites, dont les flancs sont contenus dans des plans parallèles, et qui sont complémentaires du jeu associé de dentures extérieures du moyeu.

Le deuxième profil de la deuxième partie du jeu de dentures intérieur du baladeur est agencé aux extrémités du baladeur et comporte des dentures droites, dont les flancs sont contenus dans des plans qui sont sécants du côté opposé au pignon fou, et qui sont complémentaires du jeu associé de dentures périphériques extérieures du pignon fou. Le jeu associé de dentures périphériques extérieures du pignon fou comporte notamment des dentures droites dont les flancs sont contenus dans des plans sécants du côté opposé au moyeu.

Par ailleurs la deuxième partie du jeu de dentures du baladeur comporte des dents sensiblement moins larges que la première partie du jeu de dentures du baladeur.

De ce fait, et plus particulièrement dans le cas d'un baladeur double destiné à craboter deux pignons fous opposés agencés de part et d'autre du baladeur, la longueur de guidage du baladeur, qui correspond à celle de la première partie du jeu de dentures, se trouve d'autant réduite que la longueur axiale de la deuxième partie du jeu de dentures du baladeur est plus grande.

Ceci est particulièrement nuisible à la précision de guidage du baladeur, et peut même entraîner l'apparition d'un jeu important entre le baladeur et le moyeu qui le porte, induisant ainsi un mauvais fonctionnement du dispositif de synchronisation, voire à terme la destruction de celui-ci.

Pour remédier à cet inconvénient, l'invention propose un dispositif de synchronisation du type décrit précédemment comportant un guidage axial du baladeur sur toute sa longueur.

Dans ce but, l'invention propose un dispositif de synchronisation du type décrit précédemment, caractérisé en ce que la deuxième partie du jeu de dentures du baladeur est décalée radialement par rapport à la première partie du jeu de dentures et aux dentures associées du moyeu.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe par un plan axial d'un demi-dispositif de synchronisation selon l'état antérieur de la technique ;
- la figure 2 est une vue en coupe par le plan 2-2 de la figure 1 du dispositif de synchronisation selon l'état antérieur de la technique ;
- la figure 3 est une vue en coupe par un plan axial d'un demi-dispositif de synchronisation selon l'invention ;
- la figure 4 est une vue en coupe par le plan 4-4 de la figure 3 du dispositif de synchronisation selon l'invention ;
- la figure 5 est une vue en coupe par le plan 5-5 de la figure 3 du dispositif de synchronisation selon l'invention ;
- la figure 6 est une vue de détail de la figure 4 ; et
- la figure 7 est une vue en coupe transversale de détail des dentures du baladeur et des dentures du moyeu.

Dans la description qui va suivre, des chiffres de référence identiques désignent des pièces identiques ou ayant des fonctions similaires, et les termes "avant" et "arrière" sont utilisés pour décrire des éléments situés respectivement à droite et à gauche des figures.

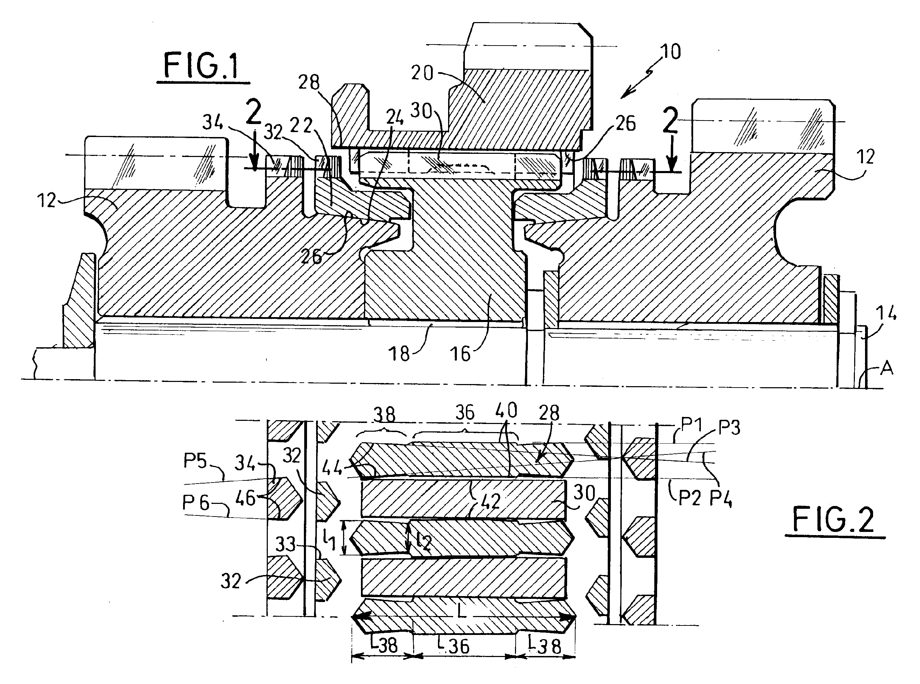

On a représenté à la figure 1 l'ensemble d'un dispositif 10 pour la synchronisation en rotation de deux pignon fous 12 avant et arrière, réalisé conformément à un état antérieur de la technique. Le dispositif 10 est notamment destiné à permettre la synchronisation de deux pignons 12 opposés tournants fous sur un arbre 14, de direction axiale A, appartenant à une boîte de vitesses (non représentée) de véhicule automobile à au moins deux arbres parallèles.

Dans la suite de la présente description, on décrira seulement le fonctionnement de la partie arrière du dispositif 10 en relation avec le pignon fou 12, situé à gauche des figures.

De manière connue, le dispositif 10 comporte un moyeu 16 fixe qui est lié en rotation avec l'arbre 14 par l'intermédiaire de cannelures 18, et qui reçoit en coulissement axial et entraîne en rotation un baladeur 20 qui est destiné à être craboté sur le pignon fou 12 pour entraîner celui-ci en rotation.

Un anneau 22 de synchronisation est interposé axialement entre le baladeur 20 et le pignon fou 12 pour permettre la synchronisation en rotation du pignon fou 12 c'est-à-dire son entraînement à une vitesse égale à celle de l'arbre 14, avant qu'il ne soit craboté sur cet arbre par l'intermédiaire du baladeur 20.

A cet effet, le baladeur 20 est mobile entre une première position axiale avant de repos, qui est celle représentée à la figure 1, dans laquelle le baladeur 20 est éloigné axialement du pignon fou 12 arrière en laissant libre l'anneau 22 de synchronisation, et une deuxième position (non représentée) axiale arrière de crabotage dans laquelle le baladeur 20 est craboté sur le pignon fou 12 arrière, en passant par une position axiale intermédiaire de synchronisation dans laquelle le baladeur 20 est rapproché du pignon fou arrière 12 en sollicitant axialement l'anneau 22 de synchronisation pour amener une portée 24 tronconique intérieure de l'anneau de synchronisation au contact d'une portée 26 complémentaire tronconique avant du pignon fou 12 arrière afin d'entraîner le pignon fou 12 arrière à la même vitesse de rotation que l'arbre 14.

Comme l'illustrent les figures 1 et 2, le baladeur 20 comporte un alésage intérieur 26 qui est muni d'un jeu de dentures intérieures 28 de longueur axiale totale "L".

Le jeu de dentures intérieures 28 du baladeur 20 coopère, en position axiale avant de repos, en position intermédiaire de synchronisation, et en position axiale arrière crabotée, avec des dentures complémentaires extérieures 30 du moyeu 16 pour assurer le guidage et l'entraînement en rotation du baladeur 20 par le moyeu 16.

Le jeu de dentures 28 intérieures du baladeur 20 est aussi destiné, en position intermédiaire de synchronisation, à coopérer avec un jeu de dentures 32 de l'anneau 22 de synchronisation pour le pousser vers le pignon fou 12, et est destiné, en position axiale arrière de crabotage, à coopérer avec le jeu de dentures 32 de l'anneau de synchronisation pour immobiliser ce dernier en rotation par rapport au moyeu 16 et au pignon fou 12.

Enfin, le jeu de dentures intérieures 28 du baladeur 20 est destiné, en position axiale arrière de crabotage, à coopérer avec un jeu de dentures 34 du pignon fou pour entraîner le pignon fou 12 en rotation.

A cet effet, les dentures 28 du baladeur 20 comportent une première partie 36, d'un premier profil déterminé, qui est destinée à coopérer avec les dentures extérieures 30 du moyeu 16 pour assurer le guidage et l'entraînement du baladeur 20 par le moyeu 16, et comportent une deuxième partie 38, d'un deuxième profil déterminé, qui coopère avec le jeu complémentaire associé de dentures 34 du pignon fou 12 pour assurer le crabotage et le maintien en position crabotée du baladeur 20 sur le pignon fou 12.

Par ailleurs, les première partie 36 et deuxième partie 38 des dentures 28 du baladeur 20 sont destinées à coopérer avec le jeu de dentures 32 de l'anneau 22 de synchronisation pour l'immobiliser en rotation.

De manière connue, la première partie 36 du jeu de dentures 28 du baladeur 20 est agencée dans une partie médiane de longueur L₃₆ du jeu de dentures 28 du baladeur 20 et correspond à un profil de dentures droites, c'est à dire de ligne moyenne axiale, dont les flancs 40 sont contenus dans des plans P1, P2 parallèles. Les dentures 30 du moyeu 16 présentent des flancs 42 parallèles similaires.

La deuxième partie 38 du jeu de dentures 28 du baladeur 20 est agencée dans une partie d'extrémité de longueur L₃₈ du jeu de dentures 28 du baladeur 20 et correspond aussi à un profil de dentures droites dont les flancs 44 sont contenus dans des plans P3, P4 qui sont sécants du côté opposé au pignon fou 12, c'est à dire en avant du baladeur 20 sur la figure 1. Le jeu de dentures périphériques extérieures 34 complémentaire associé du pignon fou 12 comporte des dentures 34 droites dont les flancs 46 sont contenus dans des plans P5, P6 sécants du côté opposé au moyeu 16, c'est à dire en arrière du pignon fou 12, en complémentarité des flancs 44 de la deuxième partie 38 du jeu de dentures 28 du baladeur 20.

La deuxième partie 38 du jeu de dentures 28 du baladeur 20 présente donc, comme l'illustre la coupe de la figure 2 selon un plan perpendiculaire à la direction radiale, une forme sensiblement trapézoïdale complémentaire et opposée à celle du jeu de dentures 34 du pignon fou. Cette configuration permet, en position axiale arrière de crabotage du baladeur 20, d'une part d'entraîner en rotation le pignon fou 12 du fait des contacts établis entre les flancs 44 des dentures 28 du baladeur 20 et les flancs 46 des dentures 34 du pignon fou 12 et d'autre part, de prévenir le glissement axial des flancs 44 et 46 l'un contre l'autre, et constitue ainsi un système "d'anti-lâcher" qui permet au baladeur 16 de rester craboté sur le pignon fou 12.

Par ailleurs, le trapèze formé par la denture 28 du baladeur 20 dans sa deuxième partie est d'une largeur "I₁" qui est sensiblement égale à celle de la denture 28 du baladeur 20 dans sa première partie.

De la sorte, le trapèze formé par la denture 28 du baladeur 20 dans sa deuxième partie a une largeur qui est comprise entre la largeur "I₁" maximale et une largeur minimale "I₂" au niveau de son raccordement avec la première partie du jeu de dentures 28.

Or, selon cette conception connue, la première partie 36 et la deuxième partie 38 de dentures 28 du baladeur 20 se succèdent axialement et sont de même "hauteur" ou encombrement radial.

Cette conception présente donc l'inconvénient de limiter la zone de la denture 28 qui guide le baladeur 20 sur le moyeu 26 à la seule première partie 36 médiane, de longueur L_{36,} du jeu de dentures 28.

Cette conception n'est pas satisfaisante et peut même entraîner l'apparition d'un jeu entre le baladeur 20 et le moyeu 26, ce qui pourrait, à plus ou moins longue échéance, induire un mauvais fonctionnement du dispositif 10 de synchronisation, voire provoquer sa destruction.

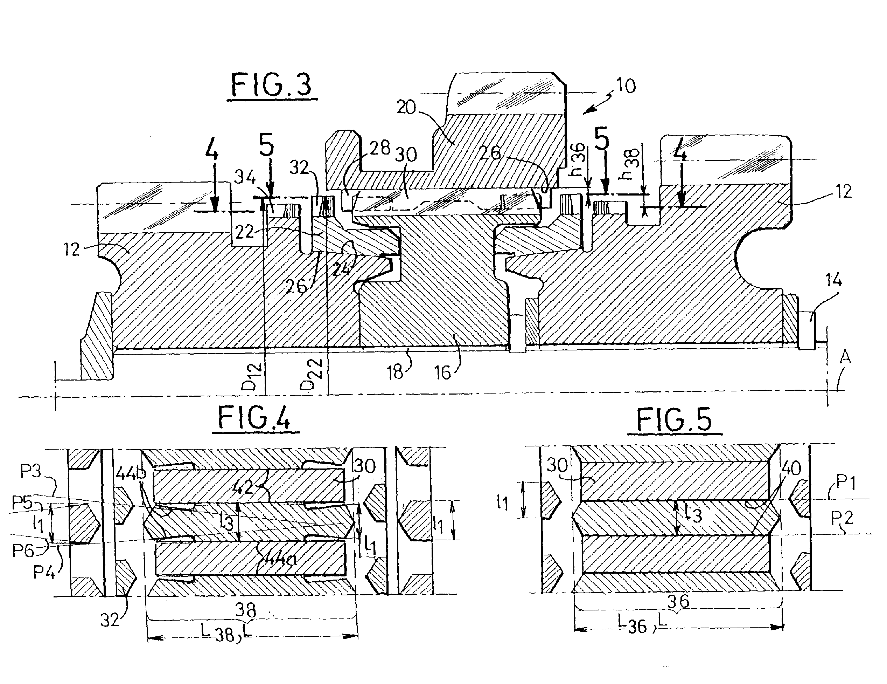

Pour remédier à cet inconvénient, et comme illustré aux figures 3 à 7, l'invention propose un dispositif 10 pour lequel la première partie 36 et la deuxième partie 38 du jeu de dentures 28 du baladeur 20, de premier et deuxième profils respectifs déterminés, sont agencées suivant des diamètres distincts D₃₆ et D38 du baladeur 20 , en regard des jeux de dentures 30 et 34 correspondants du moyeu 16 et du pignon fou 12.

Comme l'illustre la figure 3, l'invention consiste en ce que les première partie 36 et deuxième partie 38 du jeu de dentures 28 sont superposées radialement et s'étendent sur toute la longueur axiale "L" du baladeur 20, de manière à disposer d'une longueur de guidage maximale du baladeur 20.

Ainsi, la première partie 36 du jeu de dentures 28 s'étend radialement à partir de l'alésage 26 du baladeur 20 vers l'axe A du dispositif 10 selon un encombrement radial ou hauteur h₃₆, et la deuxième partie 38 du jeu de dentures 28 s'étend radialement dans le prolongement de la première partie 36 du jeu de dentures 28 selon un encombrement radial ou hauteur h₃₈.

La première partie 36 du jeu de dentures 28 droites du baladeur 20 comporte des flancs 40 parallèles analogues à ceux qui ont été décrits en référence aux figures 1 et 2. Le jeu de dentures 28 droites du baladeur 20 est destiné à coopérer d'une façon analogue à celle précédemment décrite avec les dentures 30 du moyeu 16. A cet effet, les dentures 30 du moyeu 16 s'étendent radialement en regard de la première partie 36 du jeu de dentures 28 droites du baladeur 20.

Le jeu de dentures droites 28 est aussi destiné à coopérer de la même façon que précédemment avec le jeu de dentures 32 de l'anneau 22 de synchronisation, qui s'étend au plus suivant un diamètre D₂₂ jusqu'en regard de la première partie 36 du jeu de dentures 28 du baladeur 20.

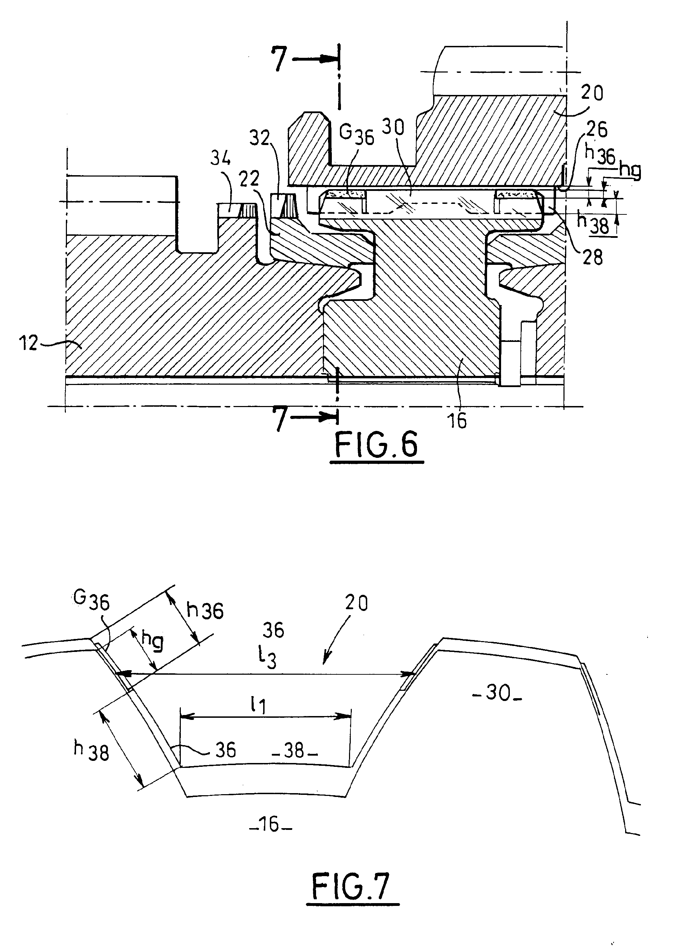

Avantageusement, la première partie 36 du jeu de dentures 28 droites du baladeur 20 s'étend donc sur une longueur L₃₆ qui est égale à la longueur axiale L du baladeur 20, ce qui permet de bénéficier, comme l'illustrent les figures 6 et 7, d'une zone G₃₆ de guidage axial supplémentaire du baladeur 20 sur le moyeu 16.

La zone G₃₆ de guidage axial présente notamment une hauteur de guidage h_{g} qui est au plus égale à la hauteur h36 de la première partie 36 du jeu de dentures 28, compte tenu du jeu fonctionnel qui doit nécessairement exister entre les dentures 28 et les dentures 30 du moyeu 16.

En revanche, la deuxième partie 38 du jeu de dentures 28 du baladeur 20 diffère sensiblement de la deuxième partie du jeu de dentures 28 du baladeur 20 précédemment décrite en référence aux figures 1 et 2.

En effet, la deuxième partie 38 du jeu de dentures 28 du baladeur 20 comporte des dentures droites qui, dans une zone médiane, comportent des flancs 44ₐ qui sont contenus dans les plans parallèles P1 et P2 des flancs de la première partie 36 de denture et qui, dans une zone d'extrémité arrière, comportent des flancs 44_{b} contenus dans des plans P3 et P4 analogues à ceux décrits précédemment en référence aux figures 1 et 2, c'est à dire qui sont sécants en avant du baladeur 20.

Le jeu complémentaire associé de dentures 34 du pignon fou 12 comporte des flancs 46 qui sont contenus dans des plans P5 et P6 qui sont sécants du côté opposé au moyeu 16, c'est à dire en arrière du pignon fou 12 sur les figures, d'une façon analogue à ceux décrits précédemment en référence à la figure 2.

De la sorte, les flancs 44ₐ de la deuxième partie 38 du jeu de dentures 28 du baladeur 20 sont superposés et coplanaires suivant les plans P1 et P2 dans la zone médiane du jeu de dentures 28 du baladeur 20 avec les flancs 40 de la première partie 36 du jeu de dentures 28 du baladeur 20, ce qui permet de bénéficier d'une denture 28 comportant une grande hauteur, et donc une grande surface de guidage.

Par ailleurs, dans le mode de réalisation préféré de l'invention, le jeu de dentures 34 du pignon fou 12 s'étend suivant un diamètre D₁₂ au plus égal au diamètre de raccordement des première partie 36 et deuxième partie 38 du jeu de dentures 28 du baladeur 20, de façon à ne coopérer qu'avec la deuxième partie 38 du jeu de dentures 28 du baladeur.

En effet, comme l'illustrent les figures 4,5, et 7, les dentures 28, au niveau de la première partie 36 du jeu de dentures 28 du baladeur 20, et de la zone médiane de la deuxième partie 38 du jeu de dentures 28 du baladeur 20, et chaque entredent, c'est à dire l'interstice séparant deux dentures 30 consécutives du moyeu 16, sont d'une largeur "I₃", qui est plus élevée que la largeur de la zone d'extrémité de la deuxième partie 38 du jeu de dentures 28 du baladeur 20 et que la largeur de chaque entredent du jeu de dentures 34 du pignon fou 12, de largeur "I₁"

Cette disposition permet avantageusement de limiter la course du baladeur 20 en position crabotée et de renforcer le jeu de dentures 28 du baladeur 20 de façon à permettre au baladeur 20 de transmettre des couples moteurs plus importants.

Enfin, il convient de remarquer que cette disposition est particulièrement avantageuse au regard du processus de fabrication du baladeur 20.

En effet, l'extrémité à plans sécants de la deuxième partie 38 du jeu de dentures 28 du baladeur 20 est conventionnellement usinée par roulage à partir d'un pignon de mise en forme.

Le dispositif 10, en proposant une extrémité de la deuxième partie 38 du jeu de dentures 28 dont la hauteur h₃₈ est réduite par rapport à la conception connue de l'état de la technique, permet de réduire considérablement l'usure des pignons de mise en forme mis en oeuvre dans le processus de fabrication.

L'invention permet donc de bénéficier d'un dispositif 10 de synchronisation comportant un baladeur 20 dont la précision de guidage est accrue par rapport à un dispositif conventionnel, ce qui améliore la précision de passage des vitesses du véhicule et augmente la longévité d'un tel dispositif.

## Revendications

1. Dispositif (10) de synchronisation d'un pignon fou (12) sur un arbre (14), comportant un moyeu (16) fixe recevant en coulissement axial et entraînant en rotation un baladeur (20) susceptible d'être craboté sur au moins un pignon fou (12), comportant un anneau (22) de synchronisation interposé axialement entre le moyeu (16) et le pignon fou (12), du type dans lequel le baladeur (20) comporte un jeu de dentures (28) dont une première partie (36) coopère avec des dentures complémentaires (30) du moyeu (16) pour assurer son entraînement en rotation et son guidage axial et dont une deuxième.partie (38) coopère avec un jeu complémentaire de dentures (34) du pignon fou (12) pour assurer le crabotage et le maintien en position crabotée du baladeur (20) sur celui-ci, du type dans lequel la deuxième partie (38) du jeu de dentures (28) du baladeur (20) est décalée radialement par rapport à la première partie (36) du jeu de dentures (28) et aux dentures (30) associées du moyeu (16), et du type dans lequel les première (36) et deuxième (38) parties du jeu de dentures (28) sont superposées et s'étendent sur toute la longueur (L) axiale du baladeur (20), de manière à disposer d'une longueur (L) de guidage maximale du baladeur (20),
caractérisé en ce que la première partie (36) du jeu de dentures (28) du baladeur (20) comporte des dentures (28) droites à flancs (40) contenus dans des plans parallèles (P1, P2) et en ce que le jeu complémentaire associé de dentures (30) du moyeu (16) comporte des dentures (30) droites à flancs (42) parallèles, complémentaires des flancs (40) de la première partie (36) du jeu de dentures (28) du baladeur.

2. Dispositif (10) selon la revendication précédente, caractérisé en ce que la deuxième partie (38) du jeu de dentures (28) du baladeur (20) comporte des dentures (28) droites qui, dans une zone médiane, comportent des flancs (44ₐ) contenus dans des plans (P1, P2) parallèles et qui, dans une zone d'extrémité, comportent des flancs (44b) contenus dans des plans (P3, P4) qui sont sécants du côté opposé au pignon fou (16), et en ce que le jeu de dentures (34) périphériques complémentaire associé du pignon fou (12) comporte des dentures droites (34) dont les flancs (46) sont contenus dans des plans sécants (P5, P6) du côté opposé au moyeu (16), complémentairement des flancs (44_{b}) de la zone d'extrémité de la deuxième partie (38) du jeu de dentures (28) du baladeur (20).

3. Dispositif (10) selon la revendication précédente, caractérisé en ce que les flancs (44ₐ) médians de la deuxième partie (38) du jeu de dentures du baladeur (20) sont superposés et coplanaires dans la zone médiane avec les flancs (40) de la première partie (36) du jeu de dentures (28) du baladeur (20).

4. Dispositif (10) selon l'une quelconque des revendications précédentes, caractérisé en ce que la première partie (36) du jeu de dentures (28) du baladeur (20) est agencée radialement à l'extérieur de la deuxième partie (38) du jeu de dentures (28) du baladeur (20).

5. Dispositif (10) selon l'une quelconque des revendications 2 à 4, caractérisé en ce que le jeu de dentures (34) du pignon fou (12) s'étend suivant un diamètre (D₁₂) au plus égal au diamètre de raccordement des première (36) et deuxième (38) parties du jeu de dentures (28) du baladeur (20).

6. Dispositif (10) selon la revendication précédente, caractérisé en ce que les dentures (28), au niveau de la première partie (36) du jeu de dentures (28) du baladeur (20) et de la zone médiane de la deuxième partie (38) du jeu de dentures (28) du baladeur (20), et chaque entredent séparant deux dentures (30) consécutives du moyeu (16) sont d'une largeur (13) plus élevée que la largeur de la zone d'extrémité de la deuxième partie (38) du jeu de dentures (28) du baladeur (20) et que la largeur (I₁) de chaque entredent du jeu de dentures (34) du pignon fou (12).

7. Dispositif (10) selon la revendication précédente, caractérisé en ce que l'anneau (22) de synchronisation comporte sur sa périphérie un jeu de dentures (32) dont les flancs (33) sont analogues à ceux de la première partie (36) du jeu de dentures (28) du baladeur (20) dans leur partie radialement la plus éloignée de l'axe (A) du dispositif (10), pour immobiliser l'anneau (22) de synchronisation en rotation une fois le baladeur (20) craboté sur le pignon fou (12).
